# DEMANDE DE BREVET EUROPEEN

(11) **EP 0 744 361 A1**
(43) Date de publication de la demande: **27.11.1996**
(21) Numéro de dépôt: 96401095.3
(22) Date de dépôt: 20.05.1996
(51) Int. Cl.: B65G 17/20, B62D 65/00, B65G 47/61

(54) **Convoyeur à luges bichaîne en porte-à-faux**

(30) Priorité: 23.05.1995 FR 9506126
(71) Demandeur: AIR INDUSTRIE SYSTEMES, F-92400 Courbevoie (FR)
(72) Inventeur: Marquier, Bernard, 75014 Paris (FR); Debbia, Bernard, 78540 Vernouillet (FR)
(74) Mandataire: Fournier, Michel

(57) **Abrégé**

L'invention concerne un convoyeur à luges (1) comprenant une voie de convoyage (3) définissant une direction de convoyage (4), des moyens d'entraînement à défilement sans fin (5), et des pendards (6) associés aux moyens d'entraînement à défilement sans fin (5), définissant une direction de suspension (7), et une direction latérale (8) perpendiculaire au plan défini par la direction de suspension (7) et la direction de convoyage (4) , lesdits pendards (6) ayant une extrémité libre (9) comprenant des moyens de chargement (10) destinés à coopérer avec des moyens de chargement complémentaires (11) d'une luge (1) supportant un objet à convoyer (12),
selon l'invention tous les pendards (6) sont associés aux moyens d'entraînement à défilement sans fin d'un transporteur aérien (2) unique.

## Description

L'invention concerne un convoyeur à luges.

On connaît des convoyeurs à luges comprenant deux transporteurs aériens à défilement sans fin disposés de part et d'autre d'une voie de convoyage définissant une direction de convoyage.

Ces convoyeurs ont pour fonction de charger, en début de voie de convoyage, une luge supportant un objet, de transporter cette luge suivant la voie de convoyage, de décharger la luge et l'objet transporté en fin de voie de convoyage. En outre ces convoyeurs sont à défilement sans fin, les moyens de chargement revenant par un trajet retour en début de voie de convoyage pour charger une autre luge.

La voie peut comprendre de multiples ateliers de transformation relatifs à l'objet transporté. Notamment la voie de convoyage peut comprendre au moins une cuve comprenant un produit destiné au traitement de l'objet transporté. Par exemple ces cuves peuvent contenir de la peinture ou équivalent, l'objet transporté étant une carrosserie de véhicule.

On connaît des convoyeurs tels que décrits dans DE-A-3024195 qui comprennent des balancelles chacune associée aux deux transporteurs aériens. Les balancelles portent les luges, et les objets à convoyer sont disposés sur les luges.

Cette disposition rend le chargement et le déchargement des luges complexes, et du fait de la présence des balancelles entre les deux transporteurs aériens, le trajet retour doit être fait au-dessus ou en dessous de la voie de convoyage, ce qui est pénalisant spacialement.

En outre dans le cas de cuve de traitement, le rayon de courbure de la transition pour le passage dans la dénivellation est important.

En effet, les balancelles sont libres en rotation autour d'un axe perpendiculaire à la direction de convoyage, de ce fait un changement rapide de direction dû à la dénivellation induirait des balancements longitudinaux des balancelles et donc de la luge et de l'objet transporté.

Pour limiter ces balancements il est donc nécessaire que le changement de direction soit le plus doux possible, c'est à dire que le rayon de courbure du changement de direction soit important.

Cela a pour inconvénient de rallonger substantiellement la longueur des voies de convoyage.

Il existe des convoyeurs où chaque dispositif transporteur a ses propres moyens suspendus ayant une extrémité libre comprenant des moyens de chargement destinés à coopérer avec des moyens de chargement complémentaires associés à la luge supportant un objet à convoyer.

En fonctionnement de service du convoyeur, les moyens suspendus suivent de façon continue, un trajet aller de convoyage dans lequel ils sont associés à une luge, et un trajet retour de recyclage dans lequel ils sont ramenés à vide au début du trajet aller de convoyage.

Un tel convoyeur est décrit dans FR-A-2588837. Dans ce document les convoyeurs aériens sont monorails, les moyens suspendus sont des pendules associés à l'un ou à l'autre des deux monorails, et ayant une extrémité libre en forme de crochet pour moyens de chargement de la luge. La luge comprend des bras pour moyens complémentaires de chargement. Le trajet retour des pendules s'effectue par retour latéral extérieur, ce qui permet d'économiser de l'espace.

Cependant le convoyeur selon FR-A-2588837 a notamment pour inconvénients :
- les degrés de liberté latéral et longitudinal des pendules générant des mouvements ou balancements transversaux ou longitudinaux des luges par rapport aux convoyeurs aériens, d'où, comme pour les convoyeurs précédents, des rayons de courbure important pour les changements de direction dans les dénivellations;
- l'utilisation de luges spécifiques dont le gabarit est supérieur aux objets transportés du fait de la présence des bras de chargement, ce qui induit une voie de convoyage plus large qu'il ne serait nécessaire.

De plus de tels dispositifs impose une voie de convoyage rectiligne du fait de la présence des transporteurs de part et d'autre de ladite voie. En outre sur ces voies de convoyage rectilignes seul le trajet situé entre les transporteurs est utilisable en convoyage, les trajets retour latéral extérieur à vide des pendards sont perdus pour le convoyage.

la présente invention a pour objet de proposer un convoyeur à luge palliant notamment les inconvénients cités ci-dessus.

A cet effet l'invention concerne un convoyeur à luges comprenant une voie de convoyage définissant une direction de convoyage, des moyens d'entraînement à défilement sans fin, et des pendards associés aux moyens d'entraînement à défilement sans fin, définissant une direction de suspension, et une direction latérale perpendiculaire au plan défini par la direction de suspension et la direction de convoyage, lesdits pendards ayant une extrémité libre comprenant des moyens de chargement destinés à coopérer avec des moyens de chargement complémentaires associés à au moins une luge supportant un objet à convoyer.

Selon l'invention tous les pendards sont associés aux moyens d'entraînement à défilement sans fin d'un transporteur aérien unique localisé le long de la voie de convoyage.

selon une caractéristique de l'invention, les moyens d'entraînement à défilement sans fin comprennent au moins deux dispositifs à défilement sans fin, identiques parallèles et superposés dans la direction de suspension, et synchronisés entre eux, chaque pendard étant entraîné par l'un et l'autre des deux dispositifs à défilement sans fin identiques superposés.

Les pendards ont une forme générale en "L" comprenant une jambe principale s'étendant sensiblement dans la direction de suspension, et associée aux deux dispositifs à défilement sans fin identiques et superposés, et une jambe de chargement s'étendant sensiblement dans la direction latérale vers la voie de convoyage, les moyens de chargement du pendard comprenant ladite jambe de chargement, les moyens de chargement complémentaires de la luge comprenant un réceptacle pour la jambe de chargement.

Chaque dispositif à défilement sans fin comprend une chaîne ou équivalent à défilement sans fin, une pluralité d'éléments de support de chaîne entraînés par la chaîne ou équivalent à défilement sans fin, montés sur un rail de guidage et de support de chaîne, et une pluralité d'éléments de reprise d'effort latéral, entraînés par la chaîne ou équivalent à défilement sans fin, montés dans un rail de guidage et de reprise d'effort latéral, chacun desdits pendards étant entraînés au moins par un premier et un deuxième élément de guidage et de reprise d'effort latéral appartenant respectivement à l'un et de l'autre des dispositifs à défilement sans fin.

Selon une caractéristique du mode de réalisation, chacun des éléments de guidage et de reprise d'effort latéral entraînant un pendard, est directement solidaire avec au moins un élément de support.

Les pendards sont solidaires des éléments de guidage et de reprise d'effort latéral suivant les directions latérale et de convoyage, et mobiles en rotation autour d'un axe de direction latérale par rapport aux éléments de guidage et de reprise d'effort latéral auxquels ils sont associés.

Avantageusement au moins une partie des pendards est suspendue uniquement aux éléments de guidage et de reprise d'effort latéral d'un des deux dispositifs à défilement sans fin identiques superposés, et au moins une autre partie des pendards est suspendue uniquement aux éléments de guidage et de reprise d'effort latéral de l'autre des deux dispositifs à défilement sans fin identiques superposés.

Dans un mode de réalisation particulier, les éléments supports de chaîne sont des trolleys reposant sur le rail de guidage et de suspension, et sont mobiles en translation avec la chaîne ou équivalent dans la direction de convoyage.

Le rail de guidage et de reprise d'effort latéral est un rail ayant une section transversale de forme générale en "U", chaque élément de guidage et de reprise d'effort latéral comprenant deux galets d'axe de rotation perpendiculaire à la branche transversale de la forme en "U", disposés dans la forme en "U", chacun desdits galets étant monté à une des extrémités d'un élément de poutre longitudinal, ledit élément de poutre comprenant des moyens centrés d'association avec un pendard, chaque extrémité d'élément de poutre étant solidarisé directement avec un trolley.

Les moyens centrés d'association avec un pendard comprennent un axe de direction latérale monté sensiblement au centre de l'élément de poutre, comprenant une extrémité libre, la dite jambe principale de chaque pendard s'étendant dans la direction générale de suspension, étant suspendue à, et entraînée par l'extrémité libre de l'axe de direction latérale d'un élément de guidage et de reprise d'effort latéral d'un des deux dispositifs à défilement sans fin, et seulement entraînée par l'extrémité libre l'axe de direction latérale d'un élément de guidage et de reprise d'effort latéral de l'autre dispositif à défilement sans fin.

La luge comprend deux patins longitudinaux reliés par des montants transversaux, au moins quatre réceptacles en forme de "C" sensiblement disposés à proximité des extrémités longitudinales des patins longitudinaux, les réceptacles disposés à l'avant de la luge présentant l'ouverture du "C" vers l'avant de la luge, les réceptacles disposés à l'arrière de la luge présentant l'ouverture du "C" vers l'arrière de la luge, un pendard étant espacés du pendard précédent et du pendard suivant d'une distance sensiblement égale à la distance séparant les deux réceptacles d'un patin longitudinal de la luge.

Les moyens de chargement d'un pendard et les moyens complémentaires de chargement de la luge constituent une liaison pivotante autour d'un axe de direction latérale.

Les moyens de chargement d'un pendard et les moyens complémentaires de chargement de la luge constituent une liaison sécurisée durant le trajet de convoyage.

Un premier avantage de la présente invention est dû au fait que le convoyeur ne comprend plus qu'un seul transporteur aérien. De ce fait outre l'économie spatiale, il est possible que la voie de convoyage comprenne des courbes dans le plan perpendiculaire à la direction de suspension. Ainsi il est possible de mettre en place des circuits fermés dans lesquels les trajets aller et retour sont exploités en convoyage, le trajet de recyclage à vide étant réduit au minimum. En outre ce transporteur unique est localisé sur un des côtés de la voie de convoyage et utilise des pendards en forme de "L", ce qui dégage le dessus de la luge et donc l'objet convoyé.

Un autre avantage de la présente invention est dû au fait que le pendard est entraîné par les deux dispositifs à défilement sans fin superposés ce qui fait deux points d'association au transporteur aérien et donc les pendards restent toujours parallèles entre eux, et les balancements longitudinaux de la luge sont supprimés. Ainsi les rayons de courbure dans les changements de direction pour les dénivellations peuvent être sensiblement réduits, induisant une diminution de la longueur de la voie de convoyage.

Un autre avantage de la présente invention est dû au fait que les pendards sont bloqués dans la direction latérale, ce qui entraîne la suppression des balancements latéraux de la luge. Cette caractéristique permet l'utilisation des pendards en forme de "L" en reprenant les efforts latéraux dus à la position en porte-à-faux de la luge sur les pendards.

D'autres avantages et caractéristiques de la présente invention résulteront de la description qui va suivre en référence aux dessins annexés dans lesquels :

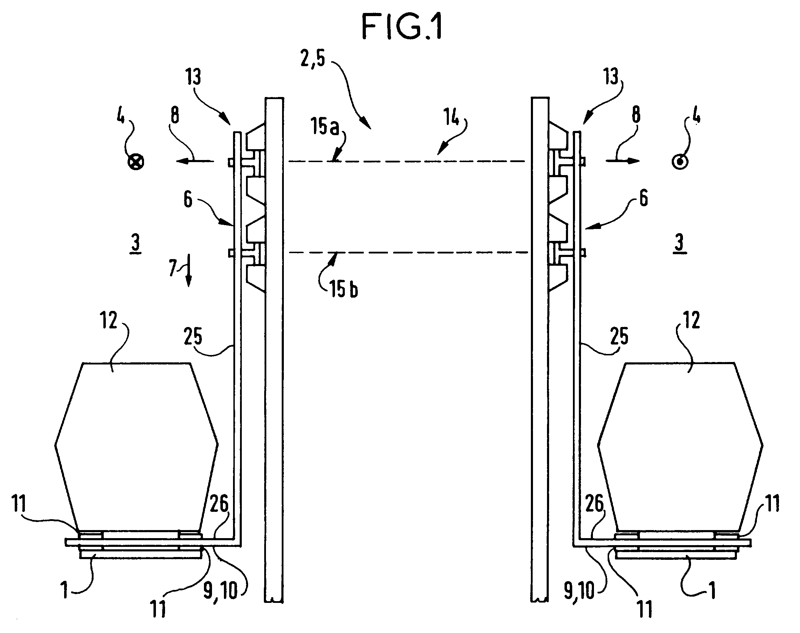

La figure 1 est une représentation schématique partielle en coupe transversale d'un convoyeur selon l'invention.

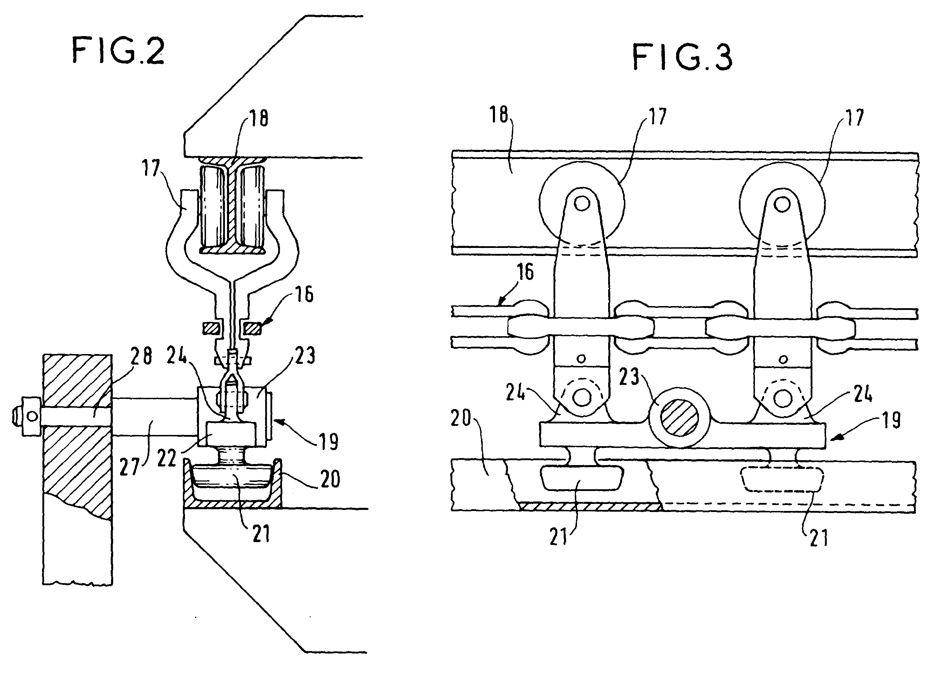

La figure 2 est une représentation schématique suivant la direction de convoyage d'un dispositif à défilement sans fin faisant partie d'un convoyeur selon l'invention.

La figure 3 est une représentation schématique suivant la direction latérale d'un dispositif à défilement sans fin faisant partie d'un convoyeur selon l'invention.

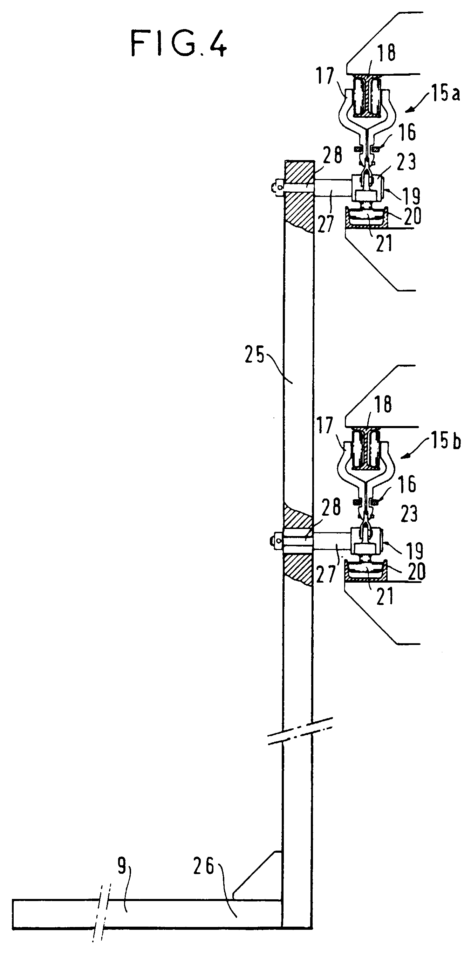

La figure 4 est une représentation schématique suivant la direction de convoyage, de l'association d'un pendard aux dispositifs à défilement sans fin.

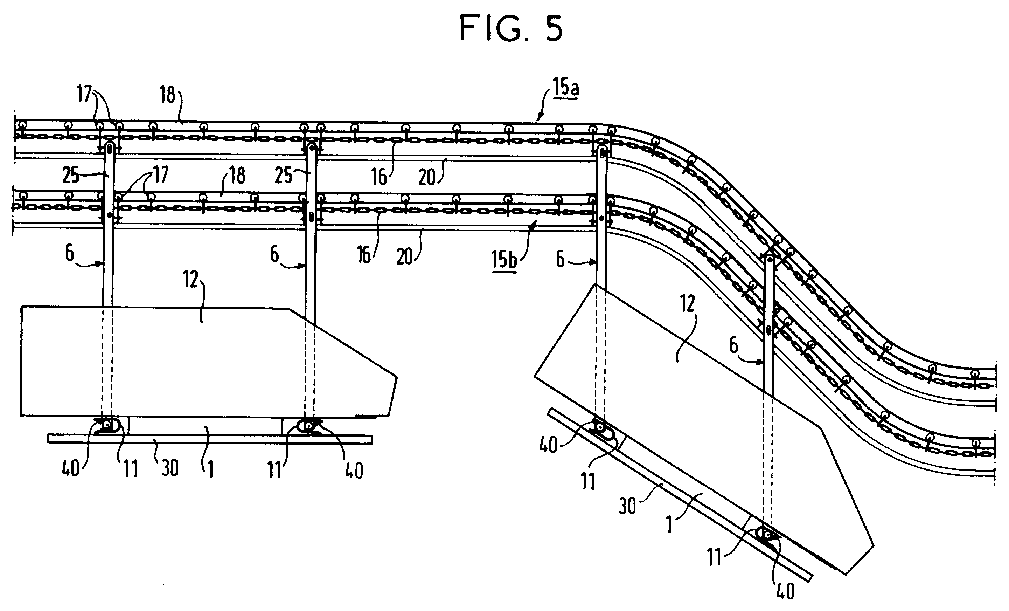

La figure 5 est une représentation schématique d'une dénivellation dans un convoyeur selon l'invention.

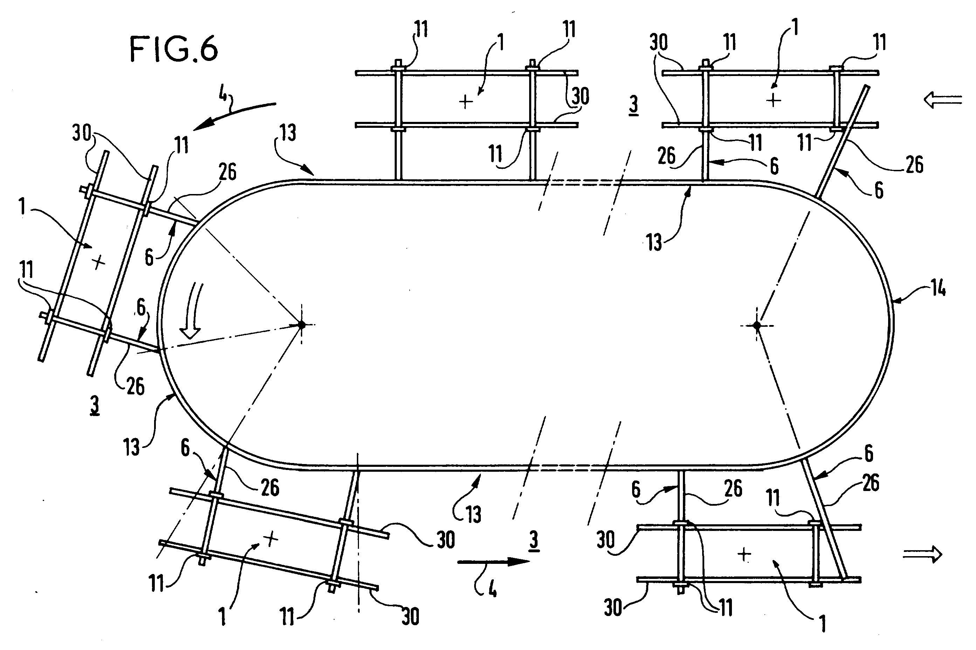

La figure 6 est une représentation schématique d'une phase de chargement, d'une phase de courbe, et d'une phase de déchargement de luges dans un convoyeur selon l'invention.

l'invention concerne un convoyeur à luges 1 comprenant un transporteur aérien 2 unique disposé le long d'une voie de convoyage 3 définissant une direction de convoyage 4.

le transporteur aérien 2 comprend des moyens d'entraînement à défilement sans fin 5, et des pendards 6 associés aux moyens d'entraînement à défilement sans fin 5.

Les pendards 6 définissent une direction de suspension 7, correspondant à la direction selon laquelle les pendards pendent en service (direction sensiblement verticale), et une direction latérale 8(direction sensiblement horizontale) perpendiculaire au plan défini par la direction de suspension 7 et la direction de convoyage 4.

Chaque pendard 6 a une extrémité libre 9 comprenant des moyens de chargement 10 destinés à coopérer avec des moyens de chargement complémentaires 11 des luges 1 supportant des objets à convoyer 12.

Les moyens d'entraînement à défilement sans fin 5 de chaque transporteur aérien 2 comprennent au moins deux dispositifs de défilement sans fin 15a, 15b identiques parallèles et superposés dans la direction de suspension 7. Ces dispositifs à défilement sans fin 15a, 15b sont synchronisés l'un avec l'autre

Les pendards 6 ont une formes générale en "L" comprenant une jambe principale 25 s'étendant sensiblement dans la direction de suspension 7, et associée aux deux dispositifs à défilement sans fin identiques et superposés 15a, 15b, et une jambe de chargement 26 s'étendant sensiblement dans la direction latérale 8 vers la voie de convoyage 3.

Les moyens de chargement 10 du pendard 6 comprennent la jambe de chargement 26, les moyens de chargement complémentaires 11 de la luge comprennent au moins un réceptacle 11 pour la jambe de chargement 26.

Pour supprimer les balancements longitudinaux des pendards, chaque pendard 6 du transporteur aérien 2 est entraîné par l'un et l'autre des deux dispositifs 15a, 15b identiques superposés et synchronisés.

Ainsi, les pendards 6 ont deux points d'entraînement superposés et synchronisé entre eux, et restent donc parallèles entre eux dans la direction de suspension 7, et les balancements longitudinaux des pendards sont supprimés.

Chaque dispositif à défilement sans fin 15a, 15b comprend une chaîne 16 ou équivalent à défilement sans fin, une pluralité d'éléments de support de chaîne 17, entraînés par la chaîne 16, montés sur un rail 18 de guidage et de support de chaîne 16.

Pour contrer l'effet de levier créé par le poids de la luge 1 portant sur la jambe de chargement 26 des pendards 6, chaque dispositif à défilement sans fin 15a, 15b comprend une pluralité d'éléments de reprise d'effort latéral 19, entraînés par la chaîne 16 ou équivalent à défilement sans fin, montés dans un rail 20 de guidage et de reprise d'effort latéral, chacun desdits pendards étant associés au moins par un premier et un deuxième éléments 19 de guidage et de reprise d'effort latéral appartenant respectivement à l'un 15a et de l'autre 15b des dispositifs à défilement sans fin.

Les pendards 6 sont solidaires des éléments 19 de guidage et de reprise d'effort latéral suivant les directions latérale 8 et de convoyage 4, et mobiles en rotation autour d'un axe de direction latérale 8 par rapport aux éléments 19 de guidage et de reprise d'effort latéral.

Avantageusement et afin de soulager la chaîne 16 chacun des éléments 19 de guidage et de reprise d'effort latéral entraînant un pendard 6, est directement solidaire avec au moins un élément de support 17.

Dans le mode de réalisation de l'invention représenté sur les figures, les éléments 17 supports de chaîne sont des trolleys 17 reposant sur le rail 18 de guidage et de suspension, et sont mobiles en translation avec la chaîne 16 ou équivalent dans la direction de convoyage 4.

Le rail 20 de guidage et de reprise d'effort latéral est un rail ayant une section transversale de forme générale en "U" et disposé de manière que la branche transversale de la forme en "U" soit perpendiculaire à la direction de suspension 7.

Chaque élément 19 de guidage et de reprise d'effort latéral comprend deux galets 21 d'axe de rotation perpendiculaire à la branche transversale de la forme en "U", disposés dans la forme en "U", et chacun desdits galets 21 est monté à une des extrémités 24 d'un élément 22 de poutre longitudinal.

L'élément 22 de poutre comprenant des moyens 23 centrés d'association avec un pendard 6, chaque extrémité 24 de l'élément 22 de poutre étant solidarisé directement avec un trolley 17.

Les moyens 23 centrés d'association avec un pendard 6 comprennent un axe 27 de direction latérale 8 monté sensiblement au centre de l'élément 22 de poutre, comprenant une extrémité libre 28.

La jambe principale 25 de chaque pendard 6 s'étendant dans la direction générale de suspension 7, est associée à, et entraînée par l'extrémité libre 28 de l'axe 27 de direction latérale 8 d'un éléments de guidage et de reprise d'effort latéral 19 de chaque dispositif à défilement sans fin 15a, 15b.

Avantageusement, pour répartir la charge sur les deux dispositifs à défilement sans fin 15a, 15b, une partie des pendards 6 est suspendue uniquement à d'un des deux dispositifs à défilement sans fin 15a, 15b, et simplement entraînée par l'autre dispositif à défilement sans fin 15b, 15a.

Par exemple la jambe principale est supportée par l'extrémité libre 28 d'un axe 27 d'un élément 19 de guidage et de reprise d'effort latéral 19 l'un des dispositifs à défilement sans fin 15a, 15b, et est associé à l'extrémité libre 28 d'un axe 27 d'un élément 19 de guidage et de reprise d'effort latéral 19 de l'autre dispositif à défilement sans fin 15b, 15a, par l'intermédiaire d'une lumière oblongue de grand axe suivant la direction de suspension au travers de laquelle passe ledit axe 27 sans que la jambe principale porte dessus.

Dans le mode de réalisation de l'invention représenté sur les figures, la luge 1 comprend deux patins longitudinaux 30 reliés par des montants transversaux, et au moins quatre réceptacles 11 en forme de "C" sensiblement disposés à proximité des extrémités longitudinales des patins longitudinaux 30, les réceptacles 11 disposés à l'avant de la luge 1 présentant l'ouverture du "C" vers l'avant de la luge 1, les réceptacles disposés à l'arrière de la luge 1 présentant l'ouverture du "C" vers l'arrière de la luge 1, un pendard 6 du transporteur aérien 2 étant espacés du pendard 6 précédent et du pendard 6 suivant d'une distance sensiblement égale à la distance séparant les deux réceptacles 11 d'un patin longitudinal 30 de la luge 1.

Les jambes de chargement 26 des pendards 6 ont une longueur suffisante pour coopérer avec les deux réceptacles avants ou les deux réceptacles arrières.

En position chargée, les jambes de chargement 26 des pendards 6 et les réceptacles de chargement 11 de la luge 1 constituent une liaison pivotante autour d'un axe de direction latérale 8.

En outre les jambes de chargement 26 des pendards 6 et les réceptacles de chargement 11 de la luge 1 constitue une liaison sécurisée.

Les jambes de chargement 26 peuvent pivoter autour des jambes principales 25 de manière à maintenir le parallélisme entre les jambes de chargement 26 et avec la luge 1 transportée dans une courbe. Ainsi la voie de convoyage 3 peut comprendre des changements de direction de convoyage 4 correspondant à des courbes comprises dans le plan perpendiculaire à la direction de suspension 7.

Dans la forme de réalisation représentée sur les figures, la jambe de chargement 26 avant peut pivoter vers l'arrière et la jambe de chargement 26 arrière peut pivoter vers l'avant. Les réceptacles 11 comprennent une butée d'arrêt 40 de telle manière que lorsqu'une luge 1 aborde une courbe, la jambe de chargement 26 avant ou arrière venant au contact des butées d'arrêt 40 des réceptacles 11 respectivement avant et arrière soit contrainte de pivoter respectivement vers l'arrière ou vers l'avant, conservant de ce fait une position parfaite pour soutenir la luge 1 transportée.

Le convoyeur fonctionne de la façon suivante :
un pendard 6 avant passe du trajet recyclage 14 au trajet de convoyage 13 par débattement pivotant.

Les luges 1 à charger sont portées en début de voie de convoyage 3 par un dispositif de manutention inférieur du type rouleaux ou chaîne (non représenté). Le déplacement de la luge 1 est synchronisé avec la vitesse de défilement des pendards 6 de manière que les réceptacles 11 avants viennent s'engager autour de la jambe de chargement 26 du pendards 6 avant une fois que ce dernier est sur le trajet de convoyage 13.

Le déplacement de la luge 1 sur le dispositif de manutention s'effectue alors à la vitesse de défilement des pendards 6.

Un pendard 6 arrière passe du trajet recyclage 14 au trajet convoyage 13 par débattement pivotant, et vient s'engager dans les réceptacles 11 arrières. Cela est dû au fait que l'écartement entre deux pendards 6 du transporteur aérien 2 correspond à l'écart entre les réceptacles avants et arrières 11 de la luge.

La luge 1 est alors soutenue à l'avant et à l'arrière et peut être dégagée du dispositif de manutention inférieur.

Lors d'une dénivellation, les pendards 6 restent verticaux et parallèles entre eux et la luge 1 prend petit à petit l'inclinaison de la dénivellation, par pivotement des réceptacles 11 autour des jambes de chargement 26 des pendards 6.

En dénivellation descendante, les réceptacles 11 avant viennent en butée sur la jambe de chargement 26 du pendard 6 avant, retenant ainsi la luge 1 inclinée vers l'avant.

En dénivellation montante, les réceptacles 11 arrières viennent en butée sur la jambe de chargement 26 du pendard 6 arrière, tractant ainsi la luge 1 inclinée vers l'arrière.

En courbe, les jambes de chargement 26 avant et arrière pivotent afin de conserver dans la courbe leur parallélisme entre elles et avec la luge 1. Elles sont contraintes à pivoter quand elles viennent au contact des butée d'arrêt 40 des réceptacles 11.

En fin de convoyage, un dispositif de manutention inférieur supporte de nouveau la luge 1, le pendard 6 avant arrivant en fin de voie de convoyage 3, subissent un débattement pivotant autour des roues d'extrémité des dispositifs à défilement sans fin 15a, 15b, et est dégagée des réceptacles 11 avant de la luge 1.

La luge 1 est alors dégagée vers l'aval de la voie de convoyage 3 soit à une vitesse supérieure à la vitesse des pendards 6, soit poussée par le pendard 6 arrière jusqu'à ce que ce dernier subisse le débattement pivotant.

Les pendards 6 effectuent alors le trajet de recyclage 14 à vide jusqu'au début de la voie de convoyage 3 ou ils prennent en charge une nouvelle luge 1 comme précédemment décrit.

Le convoyeur ne comprenant qu'un transporteur aérien situé le long de la voie de convoyage 3, les pendards 6 pouvant prendre des courbes et les luges 1 étant en porte-à-faux, la voie de convoyage peut prendre de nombreuses configurations. En effet un tel convoyeur permet des dénivellations et des courbes.

Notamment, un tel convoyeur double la longueur utile d'un convoyeur à deux transporteurs aériens en permettant de transformer le trajet retour des pendards habituellement fait à vide en trajet de convoyage 13, le trajet de recyclage 14 est alors réduit au minimum.

Il peut être prévu un transporteur aérien auxiliaire situé en regard d'une partie du convoyeur, pourvu de pendards en forme de "L" destinés à la mise sous tension de l'objet transporté dans les phases de cataphorèse. Ce transporteur auxiliaire ne soutient pas la luge.

Bien entendu, l'invention n'est pas limitée au mode de réalisation décrit et représenté, mais elle est susceptible de nombreuses variantes accessibles à l'homme du métier sans que l'on s'écarte de l'invention. En particulier, on pourra, sans sortir du cadre de l'invention, remplacer tout moyen par un moyen équivalent.

## Revendications

1. Convoyeur à luges (1) comprenant une voie de convoyage (3) définissant une direction de convoyage (4), des moyens d'entraînement à défilement sans fin (5), et des pendards (6) associés aux moyens d'entraînement à défilement sans fin (5), définissant une direction de suspension (7), et une direction latérale (8) perpendiculaire au plan défini par la direction de suspension (7) et la direction de convoyage (4), lesdits pendards (6) ayant une extrémité libre (9) comprenant des moyens de chargement (10) destinés à coopérer avec des moyens de chargement complémentaires (11) d'une luge (1) supportant un objet à convoyer (12),
caractérisé en ce que tous les pendards (6) sont associés aux moyens d'entraînement à défilement sans fin d'un transporteur aérien (2) unique.

2. Convoyeur selon la revendication 1 caractérisé en ce que les pendards (6) ont une forme générale en "L" comprenant une jambe principale (25) s'étendant sensiblement dans la direction de suspension (7), et une jambe de chargement (26) s'étendant sensiblement dans la direction latérale (8) vers la voie de convoyage (3), les moyens de chargement (10) du pendard (6) comprenant ladite jambe de chargement (26), les moyens de chargement complémentaires (11) de la luge (1) comprenant au moins un réceptacle (11) pour la jambe de chargement (26).

3. Convoyeur selon la revendication 1 ou 2 caractérisé en ce que lorsqu'un pendard (6) est associé à une luge (1), les moyens de chargement (10) du pendard (6) et les moyens complémentaires de chargement (11) de la luge (1) constituent une liaison pivotante autour d'un axe de direction latérale (8).

4. Convoyeur selon l'une quelconque des revendications 1 à 3 caractérisé en ce que lorsqu'un pendard (6) est associé à une luge (1), les moyens de chargement (10) du pendard (6) et les moyens complémentaires de chargement (11) de la luge (1) constituent une liaison sécurisée.

5. Convoyeur selon l'une quelconque des revendications 2 à 4 caractérisé en ce que la luge (1) comprend deux patins longitudinaux (30) reliés par des montants transversaux, au moins quatre réceptacles (11) en forme de "C" chacun sensiblement disposé à proximité d'une des extrémités longitudinales des patins longitudinaux (30), les réceptacles (11) disposés à l'avant de la luge (1) présentant l'ouverture du "C" vers l'avant de la luge (1), les réceptacles (11) disposés à l'arrière de la luge (1) présentant l'ouverture du "C" vers l'arrière de la luge (1), un pendard (6) étant espacés du pendard (6) précédent et du pendard (6) suivant d'une distance sensiblement égale à la distance séparant les deux réceptacles (11) d'un patin longitudinal (30) de la luge (1), les réceptacles avant étant associés à la jambe de chargement d'un pendard avants, et les réceptacles arrières étant associés à la jambe de chargement d'un pendard arrière.

6. Convoyeur à luges (1) selon l'une quelconque des revendications 1 à 5 caractérisé en ce que les moyens d'entraînement à défilement sans fin (5) du transporteur aérien (2) comprennent au moins deux dispositifs à défilement sans fin (15a, 15b) identiques parallèles et superposés dans la direction de suspension (7), et synchronisés entre eux, chaque pendard (6) étant entraîné par l'un (15a) et l'autre (15b) des deux dispositifs à défilement sans fin identiques superposés.

7. Convoyeur selon la revendication 6 caractérisé en ce que, chaque dispositif à défilement sans fin (15a, 15b)comprend une chaîne (16) ou équivalent à défilement sans fin, une pluralité d'éléments de support de chaîne (17) entraînés par la chaîne (16) ou équivalent à défilement sans fin, montés sur un rail de guidage et de support de chaîne (18), et une pluralité d'éléments de reprise d'effort latéral (19), entraînés par la chaîne (16) ou équivalent à défilement sans fin, montés dans un rail de guidage et de reprise d'effort latéral (20), chacun desdits pendards (6) étant entraînés au moins par un premier et un deuxième éléments de guidage et de reprise d'effort latéral (19) appartenant respectivement à l'un (15a) et de l'autre (15b) des dispositifs à défilement sans fin.

8. Convoyeur selon la revendication 7 caractérisé en ce que chacun des éléments de guidage et de reprise d'effort latéral (19) entraînant un pendard (6), est directement solidaire avec au moins un élément de support de chaîne (17).

9. Convoyeur selon la revendications 7 ou 8 caractérisé en ce que les pendards (6) sont solidaires des éléments de guidage et de reprise d'effort latéral (19) suivant les directions latérale (8) et de convoyage (4), et mobiles en rotation autour d'un axe de direction latérale (8) par rapport aux éléments de guidage et de reprise d'effort latéral (19).

10. Convoyeur selon l'une quelconque des revendications 7 à 9 caractérisé en ce que au moins une partie des pendards (6) est suspendue uniquement aux éléments de guidage et de reprise d'effort latéral (19) d'un (15a, 15b) des deux dispositifs à défilement sans fin identiques superposés, et au moins une autre partie des pendards (6) est suspendue uniquement aux éléments de guidage et de reprise d'effort latéral (19) de l'autre (15b, 15a) des deux dispositifs à défilement sans fin identiques superposés.

11. Convoyeur selon l'une quelconque des revendications 7 à 10 caractérisé en ce que les éléments supports de chaîne (17) sont des trolleys (17) reposant sur le rail de guidage et de suspension (18), et sont mobiles en translation avec la chaîne (16) ou équivalent dans la direction de convoyage (4), et en ce que le rail de guidage et de reprise d'effort latéral (20) est un rail ayant une section transversale de forme générale en "U", chaque éléments de guidage et de reprise d'effort latéral (19) comprenant deux galets (21) d'axe de rotation perpendiculaire à la branche transversale de la forme en "U", disposés dans la forme en "U", chacun desdits galets (21) étant monté à une des extrémités (24) d'un élément de poutre longitudinal (22), ledit élément de poutre (22) comprenant des moyens (23) centrés d'association avec un pendard (6), chaque extrémité (24) de l'élément de poutre (22) étant solidarisé directement avec un trolley (17).

12. Convoyeur selon les revendications 10 et 11 caractérisé en ce que les dits moyens (23) centrés d'association avec un pendard (6) comprennent un axe (27) de direction latérale (8) monté sensiblement au centre de l'élément de poutre (22), comprenant une extrémité libre (28), la dite jambe principale (25) de chaque pendard (6) s'étendant dans la direction générale de suspension (7), étant suspendue à, et entraînée par l'extrémité libre (28) de l'axe (27) de direction latérale (8) d'un éléments de guidage et de reprise d'effort latéral (19) d'un (15a, 15b) des deux dispositifs à défilement sans fin, et seulement entraînée par l'extrémité libre (28) de l'axe (27) de direction latérale (8) d'un éléments de guidage et de reprise d'effort latéral (19) de l'autre (15b, 15a) dispositif à défilement sans fin.

13. Convoyeur selon l'une quelconque des revendications 1 à 12 caractérisé en ce que la voie de convoyage (3) comprend au moins un changement de direction de convoyage (4) correspondant à une courbe comprise dans le plan perpendiculaire à la direction de suspension (7).

14. Convoyeur selon la revendication 13 caractérisé en ce que, Les jambes de chargement (26) sont montées pivotantes autour des jambes principales (25) de manière à maintenir le parallélisme entre les jambes de chargement (26) et avec la luge (1 )transportée dans une courbe.

15. Convoyeur selon la revendication 14 caractérisé en ce que la jambe de chargement (26) avant peut pivoter vers l'arrière et la jambe de chargement (26) arrière peut pivoter vers l'avant, chaque réceptacle (11) comprenant une butée d'arrêt (40) de telle manière que lorsqu'une luge (1) aborde une courbe, la jambe de chargement (26) avant ou arrière venant au contact des butées d'arrêt (40) des réceptacles (11) respectivement avant et arrière soit contrainte de pivoter respectivement vers l'arrière ou vers l'avant, conservant de ce fait une position parfaite pour soutenir la luge (1) transportée.
